(19) Europäisches Patentamt
European Patent Office
Office européen des brevets

(11) Publication number: **0 009 299**
**A1**

(12) # EUROPEAN PATENT APPLICATION

(21) Application number: **79301244.4**

(22) Date of filing: **27.06.79**

(51) Int. Cl.³: **C 08 L 75/00**, C 08 K 5/00, C 08 G 18/00

(30) Priority: **03.07.78 GB 2865578**

(43) Date of publication of application: **02.04.80 Bulletin 80/7**

(84) Designated Contracting States: **DE FR GB IT**

(71) Applicant: **IMPERIAL CHEMICAL INDUSTRIES LIMITED, Imperial Chemical House Millbank, London SW1P 3JF (GB)**

(72) Inventor: **Herbert, John Albert Leslie, 52 Rudgwick Drive, Brandlesholme, Bury Greater Manchester (GB)**
Inventor: **Thorpe, David, 3 Ashford Close, Bury, Greater Manchester (GB)**

(74) Representative: **Stephenson, Kenneth et al, Imperial Chemical Industries Limited Legal Department: Patents Thames House North Millbank, London SW1P 4QG (GB)**

(54) **Colour stabilized organic material.**

(57) An organic material of which the colour change under the influence of light is minimised by the inclusion therein of a light-fugitive dye of appropriate hue which fades at such rate, relative to the development of colour in the organic material, that the change in colour of the organic material on exposure to light is less than would occur in the absence of the dye.

Permits the manufacture of polyurethanes which undergo minimal colour change on exposure to light.

EP 0 009 299 A1

This invention relates to the colour stabilisation of organic materials.

The tendency of many organic materials to discolour on exposure to light is well known. The materials which discolour in this way vary from relatively simple compounds to high molecular weight compounds such as polymers. In general, the problem is of greatest importance in the case of finished materials, for example plastics materials, which are likely to be exposed to light for long periods of time. The discoloration which occurs in such materials is most frequently the development of a yellow colour which deepens with time and may become orange or brown. Polyurethanes made from aromatic polyisocyanates are particularly prone to this type of discoloration.

Whilst exposure to light is an essential factor in the type of discoloration under consideration, it may not be the only essential factor and in some cases oxygen undoubtedly plays a part. In order to combat the discoloration, it has been proposed to minimise the effect of one or more of the contributory factors by including appropriate additives in the organic material. Such additives, which have included ultra-violet absorbents and antioxidants, have had varying amounts of success.

The present invention provides an organic material of which the colour change under the influence of light is minimised by the inclusion therein of a light-fugitive dye of appropriate hue which fades at such a rate, relative to the development of colour in the organic material, that the change in colour of the organic material on exposure to light is less than would occur in the absence of the dye.

Thus the present invention attempts to compensate for the development of colour in the organic material by providing a material the colour of which remains substantially unchanged due to being initially coloured by a dye which fades at substantially the same rate as that at which colour is developed in the organic material.

The dyes used in accordance with the invention must therefore colour the organic material in substantially the same colour as is eventually developed in the material by the action of light. In general, this usually means using a yellow or brown dye. Mixtures of two or more dyes may be used to match particular shades. The amount of dye used depends on the depth of shade it is desired to achieve.

The dyes used must also fade at a rate which matches the development of colour in the organic material. In practice, this means using dyes which are fugitive to light, that is to say dyes which have relatively low light-fastness. Such dyes are known and include, for example, acid dyes, disperse dyes and basic dyes. A dye having an appropriate rate of fading can be found by trial.

Ideally, the dye fades at exactly the same rate as that at which colour is developed but an overall reduction in the rate of colour change is still obtained when the rate of fading is slightly greater or slightly less than the rate of colour development.

Organic materials which may be stabilised against colour change in accordance with the present invention include, in particular, those polymeric materials which develop colour under the action of light, especially polyurethanes and other polymers made from aromatic polyisocyanates, for example tolylene diisocyanate and diphenylmethane diisocyanate. The polyurethanes may be in any of the usual forms, for example films, lacquers, elastomers or foams.

The invention is of particular importance for polyurethanes that will be exposed to light for long periods of time, for example foams having an integral skin such as are used on steering wheels and other components of the interiors of motor vehicles. Methods for the preparation of such foams have been fully described in the prior art. The dye or dyes can be introduced in any convenient manner. In the case of polyurethanes, the dyes are preferably dissolved or dispersed in one or more of the components of the polyurethane-forming reaction mixture, for example the polyol, the polyisocyanate or one of the minor components such as water when used as blowing agent.

Dyes which are especially suitable for stabilising polyurethanes are dyes which, when applied to nylon fibres, have a light-fastness of less than 2 on the usual 1 to 8 scale. Examples of suitable dyes include those monoazo dyes which exist predominantly in the hydrazo tautomeric foam. Such dyes include those which, in the azo form, have the formula:

$$A - N = N - E$$

wherein A represents the residue of a diazo component of the benzene, naphthalene or heterocyclic series and E represents the residue of a coupling component of the

α-naphthol, pyrazolone or hydroxypyridone series. Especially suitable are dyes in which E represents the residue of a 3-cyano-6-hydroxypyrid-2-one. The dyes may be water-soluble to the presence of one or more water-solubilising groups such as sulphonic acid groups or they may be water-insoluble.

If desired, the fugitive dyes can be used in conjunction with dyes or pigments of a permanent nature which can be of the same colour as the fugitive dyes or of a different colour.

It can also be advantageous to include an antioxidant and/or a material capable of absorbing ultra-violet radiation. Such materials are well known in the art.

The invention is illustrated by the following Examples in which all parts and percentages are by weight. The words "Tinuvin", "Irganox", "Vynamon", "Tioxide" and "Vulcan" appearing in the Examples are trade marks.

Example 1

A green-coloured self-skinning polyurethane foam is prepared as follows:

An ethylene oxide tipped oxypropylated glycerol having an oxyethylene content of 14% and a molecular weight of 3500 (105 parts) is heated to 80°C with Tinuvin P (1.2 parts), Tinuvin 770 (1.2 parts) and Irganox 1010 (1.2 parts) to effect complete solution. After being cooled to ambient temperature, the solution is mixed with a blend of diethylene glycol (15 parts), dipropylene glycol (2 parts) and tetrakis(hydroxypropyl)ethylene diamine (2 parts), a 33% solution of triethylene diamine in dipropylene glycol

(1 part), a yellow pigment paste (2.5 parts) consisting of a 50% dispersion of Vynamon Yellow GFG in the above-mentioned polyether and a blue pigment paste (3 parts) consisting of a dispersion of Tioxide RCR2 (18.05 parts), Vynamon Blue LBFW (1.16 parts), Vulcan 6F (0.72 part) and Vynamon Green GFW (0.06 part) in the above-mentioned polyether (80 parts).

The whole blend is then mixed with trichlorofluoromethane (20 parts) and a liquid diphenylmethane diisocyanate (60.7 parts) in a cardboard cup using an electric stirrer at 1500 rpm. After stirring for 10 seconds, the foaming mixture is poured into an open preheated (50°C) metal mould of dimensions 10 cm x 10 cm x 2.5 cm. The mould is quickly sealed and held at 50°C for 5 minutes after which a green self-skinned moulding is removed. The foam is allowed to stand for 48 hours before testing.

Example 2

The procedure of Example 1 is repeated using only 1.5 parts of the yellow pigment paste and including 0.15 part of CI Disperse Yellow 119. The moulding is of similar colour to that produced in Example 1.

Example 3

The procedure of Example 1 is repeated using only 1.5 parts of the yellow pigment paste and including 0.15 part of the yellow dye of the formula:

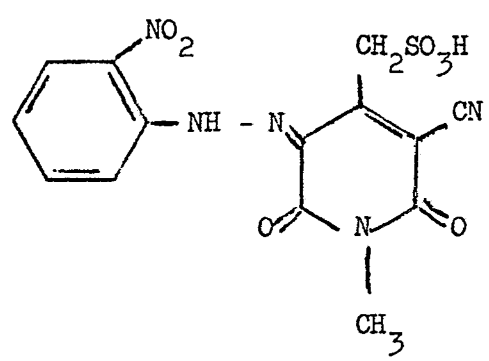

The moulding is of similar colour to that produced in Example 1.

The bottom moulded skin from each of the foams prepared in Examples 1-3 is cut off to a thickness of 2 mm. Pieces of the foam skin (4 cm x 1 cm) are placed side by side and exposed to a Xenotest lamp for 760 hours with one half of each piece protected from exposure by a metal covering.

After exposure, all three foams are yellower on the exposed portion than on the unexposed portion but the foam of Example 3 has changed signficantly less than the other two foams.

## CLAIMS

1. An organic material of which the colour change under the influence of light is minimised by the inclusion therein of a light-fugitive dye of appropriate hue which fades at such a rate, relative to the development of colour in the organic material, that the change in colour of the organic material on exposure to light is less than would occur in the absence of the dye.

2. An organic material as claimed in claim 1 wherein the dye fades at substantially the same rate as that at which colour is developed in the organic material under the influence of light.

3. An organic material as claimed in claim 1 or claim 2 which is a polyurethane.

4. A polyurethane as claimed in claim 3 wherein the dye is a monoazo dye which exists predominantly in the hydrazo tautomeric form.

5. A polyurethane as claimed in claim 4 wherein the dye, in the azo form, has the formula:

$$A - N = N - E$$

wherein A represents the residue of a diazo component of the benzene, naphthalene or heterocyclic series and E represents the residue of a coupling component of the α-naphthol, pyrazolone or hydroxypyridone series.

6. A polyurethane as claimed in claim 5 wherein E represents the residue of a 3-cyano-6-hydroxypyridone.

7. An organic polyol having dissolved or dispersed therein a light-fugitive dye which fades at such a rate relative to the development of colour in the derived polyurethane that the change in colour of the polyurethane on exposure to light is less than would occur in the absence of the dye.

8. An organic polyisocyanate having dissolved or dispersed therein a light-fugitive dye which fades at such a rate relative to the development of colour in the derived polyurethane that the change in colour of the polyurethane on exposure to light is less than would occur in the absence of the dye.

KS/BH
25.6.79.

0009299

European Patent Office

# EUROPEAN SEARCH REPORT

Application number

EP 79301244.4

| Category | Citation of document with indication, where appropriate, of relevant passages | Relevant to claim |
|---|---|---|
| A | DE - A - 1 544 708 (CIBA AG)<br>+ Claims;page 5, lines 14 - 16 +<br>-- | 1 - 8 |
| A | DE - A1 - 2 409 754 (BASF AG)<br>+ Claims; page 14, line 7 +<br>-- | 1 - 8 |
| | DE - A1 - 2 437 489 (BAYER AG)<br>+ Claims +<br>---- | 1 - 8 |

DOCUMENTS CONSIDERED TO BE RELEVANT

CLASSIFICATION OF THE APPLICATION (Int. Cl.²)

C 08 L 75/00
C 08 K 5/00
C 08 G 18/00

TECHNICAL FIELDS SEARCHED (Int.Cl.²)

C 08 L 75/00
C 08 K 5/00
C 08 G 18/00
C 08 L 23/00

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

X The present search report has been drawn up for all claims

| Place of search | Date of completion of the search | Examiner |
|---|---|---|
| VIENNA | 11-09-1979 | WEIGERSTORFER |

EPO Form 1503.1 06.78